# EUROPÄISCHE PATENTSCHRIFT

(11) **EP 0 544 858 B1**
(45) Veröffentlichungstag und Bekanntmachung des Hinweises auf die Patenterteilung: **28.12.1994**
(21) Anmeldenummer: 92911311.6
(22) Anmeldetag: 18.06.1992
(51) Int. Cl.: G01G 21/24

(54) **ZWEIPUNKT-LASTMESSZELLE**
TWO-POINT LOAD MEASURING CELL
CELLULE DE MESURE DE CHARGE A DEUX POINTS

(30) Priorität: 24.06.1991 CH 1859/91
(43) Veröffentlichungstag der Anmeldung: 09.06.1993
(73) Patentinhaber: WIRTH GALLO MESSTECHNIK AG, 8032 Zürich (CH)
(72) Erfinder: WIRTH, Johannes, CH-8032 Zürich (CH)
(74) Vertreter: Salgo, Reinhold Caspar, Dr.
(86) Internationale Anmeldenummer: CH9200116
(87) Internationale Veröffentlichungsnummer: WO9300575

(56) Entgegenhaltungen:
- EP-A- 0 195 875
- EP-A- 0 224 991
- WO-A-89/01611
- WO-A-89/03023
- WO-A-89/06785

## Beschreibung

Die vorliegende Erfindung betrifft eine stabartige, zwei Lasteingangspunkte aufweisende Lastmess-Zelle.

Die Messung linear oder flächig ausgedehnter Lasten mittels moderner elektromechanischer Kraftmessvorrichtungen stellt besondere Probleme. Wird für eine Plattformwaage eine einzige Kraftmesszelle eingesetzt, die der Natur der Sache nach einen Ein-Punkt-Krafteingang hat, so ergeben sich Beschränkungen für die Grösse der Plattform aus der Existenz des sogenannten Ecklastfehlers. In entsprechender Weise gilt dies auch für lineare Messvorrichtungen wie Hängebahn-Waagen. Für grosse Plattformen mit grosser Kapazität und lange Hängebahn-Messstrecken werden daher mehrere Kraftmesszellen eingesetzt, in der Regel drei bis vier für Plattformen, zwei für Hängebahn-Messstrecken. Da nach heutigen Verhältnissen der Einsatz von vier Kraftmesszellen erst wirtschaftlich ist für Plattform-Grössen ab etwa 2x2 m oder für Waagen grosser Kapazität - entsprechendes gilt für Hängebahnen besteht ein Grössengebiet, in welchem Plattformwaagen entweder zu ungenau oder zu teuer sind. Für kleinere Waagen mit grosser Kapazität besteht noch die Möglichkeit, die messtechnisch wesentlichen Teile zu versteifen, was aber grundsätzlich durch hohe Bauformen erkauft werden muss.

Die der vorliegenden Erfindung zugrunde liegende Aufgabe ist es, eine Lastmess-Zelle zu schaffen, die den Bau grosser und niedriger Plattformwaagen und langer Hängebahn-Messstrecken konstruktiv einfach und wirtschaftlich günstig ermöglicht.

Die Lösung der gestellten Aufgabe ist wiedergegeben im Patentanspruch 1.

Anhand der beigefügten Zeichnung wird der Erfindungsgedanke in mehreren Ausführungsbeispielen näher erläutert. Es zeigen
- Fig. 1: ein erstes Ausführungsbeispiel einer Lastmess-Zelle, eingebaut in eine Plattformwaage,
- Fig. 2: einen Schnitt durch das Ausführungsbeispiel gemäss Fig. 1,
- Fig. 3a: ein zweites Ausführungsbeispiel einer Lastmess-Zelle mit geschweisstem Profil,
- Fig. 3b: das Ausführungsbeispiel von Fig. 3a, eingebaut in eine Hängebahn-Waage
- Fig. 4: ein drittes Ausführungsbeispiel einer Lastmess-Zelle mit extrudiertem Profil,
- Fig. 5: ein viertes Ausführungsbeispiel einer Lastmess-Zelle, mit extrudiertem Profil,
- Fig. 6: ein fünftes Ausführungsbeispiel einer Lastmess-Zelle mit extrudiertem Profil,
- Fig. 7a,b: ein sechstes Ausführungsbeispiel einer Lastmess-Zelle mit verschraubten Profilen,
- Fig. 8: ein siebtes Ausführungsbeispiel einer Lastmess-Zelle mit verschraubten Profilen,
- Fig. 9: ein achtes Ausführungsbeispiel einer Lastmess-Zelle mit extrudiertem Profil, eingebaut in eine Förderbandwaage,
- Fig. 10: ein neuntes Ausführungsbeispiel einer Lastmess-Zelle mit gepresstem Profil.

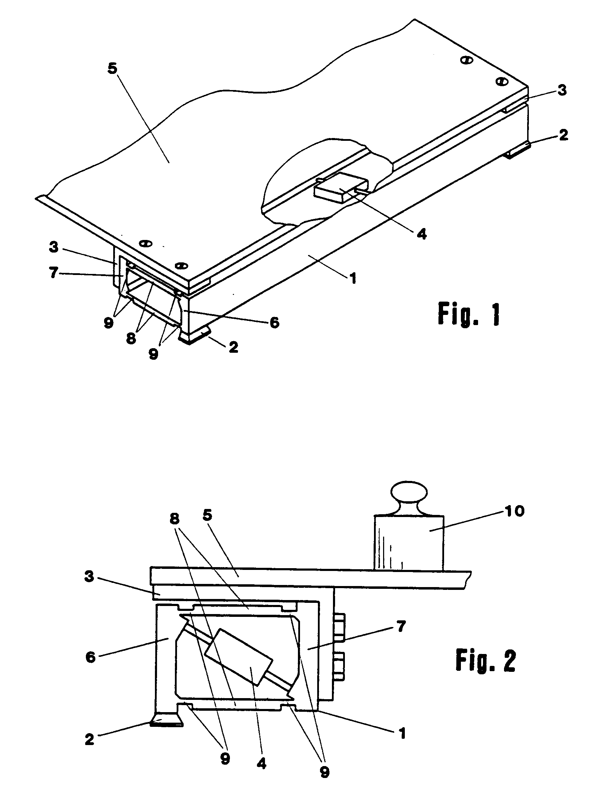

Fig. 1 ist die perspektivische, teilweise geschnittene, Darstellung eines Teils einer Plattformwaage mit einem ersten Ausführungsbeispiel einer erfindungsgemässen Lastmess-Zelle. Fig. 2 zeigt dieselbe Anordnung im Querschnitt.

Ein langgestrecktes Führungsprofil 1, bestehend aus einem stabförmigen Gestell 6, einem stabförmigen Lastträger 7 und zwei ebenfalls stabförmigen Platten 8 mit bandförmigen Biegegelenken 9, die sich über die ganze Länge des Führungsprofils 1 erstrecken, ruht mit dem Gestell 6 auf zwei Füssen 2, welche ganz aussen am Gestell 6 angebracht sind. Zwei Befestigungselemente 3 in Form von Winkeln sind an der gleichen Längsposition wie die Füsse am Lastträger 7 befestigt und tragen eine Plattform 5 auf ihrer einen Seite. Auf der anderen Seite der Plattform 5 (nicht gezeichnet) befindet sich eine identische Lastmess-Zelle, spiegelsymmetrisch zur ersten, gezeichneten.

Die Längsausdehnung des Führungsprofils 1 ist so bemessen, dass sie ein Mehrfaches seiner größten Querdimension beträgt.

Auf halber Länge des Führungsprofils 1 ist in diagonaler Stellung ein Kraftfühler 4 eingebaut. Wird die Plattform 5 belastet durch das Gewicht einer Masse 10, so wird der Kraftfluss aufgeteilt gemäss den Elastizitäten der Biegegelenke 9 und jener des Kraftfühlers 4, modifiziert durch die Winkellage des Kraftfühlers 4. Es handelt sich also um eine Untersetzung der Elastizität der Biegegelenke 9 und der eigenen oder eingebauten Elastizität des Kraftfühlers 4. Als Kraftfühler 4 kommen alle heute bekannten in Frage, wie Dehnmessstreifen, piezoelektrische, optoelastische und Schwingsaiten-Kraftmesser.

Aufgrund der hohen Steifigkeit der Platten 8 des Gestells 6 und des Lastträgers 7, im Vergleich mit jener der Biegegelenke 9, lässt sich der Ecklastfehler einer Plattformwaage gemäss Fig. 1 und 2 unter die Auflösung der Waage reduzieren. Das Gewicht einer Masse 10 wird - wie bekannt - durch Summation der Ergebnisse der zwei vorhandenen Kraftfühler 4 ermittelt.

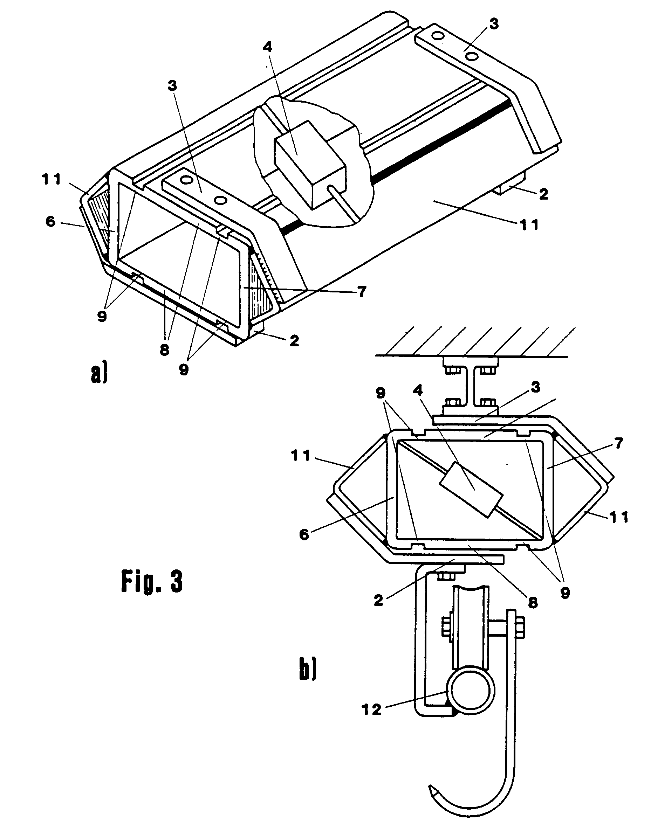

Das Ausführungsbeispiel gemäss Fig. 3 zeigt die erfindungsgemässe Lastmess-Zelle eingebaut in eine Hängebahnwaage. Das Führungsprofil 1 besteht hier aus einem gepressten Vierkantrohr. Gestell 6 und Lastträger 7 sind durch je ein aufgeschweisstes Winkelprofil 11 zusätzlich versteift.

Die Biegegelenke werden durch Ausfräsen erzeugt. Die Füsse 2 und die Befestigungselemente 3 bestehen aus an den Winkelprofilen 11 angeschweissten Winkeln. Die Befestigungselemente 3 tragen die Lastmess-Zelle und damit - über die füsse 2 - einen Schienenabschnitt 12 der Hängebahn, auf welchem die Last gewogen wird. Der Kraftfühler ist wiederum auf halber Länge des Führungsprofils 1 angebracht, wie dies grundsätzlich und erfindungsgemäss für alle Ausführungsbeispiele Geltung hat.

Wurde der Kraftfühler 4 im Ausführungsbeispiel gemäss Fig. 1 und 2 auf Zug beansprucht, so wirkt hier eine Druckkraft auf ihn. Der diagonale Einbau des Kraftfühlers 4 ist eine Möglichkeit und günstig bei Kraftfühlern 4, die eine verhältnismässig grosse eigene Nachgiebigkeit aufweisen, hingegen keineswegs zwingend, wie an nachfolgenden Ausführungsbeispielen gezeigt wird. Die Anwendung in Hängebahnwaagen ist selbstverständlich keineswegs auf dieses Ausführungsbeispiel einer erfindungsgemässen Lastmesszelle beschränkt.

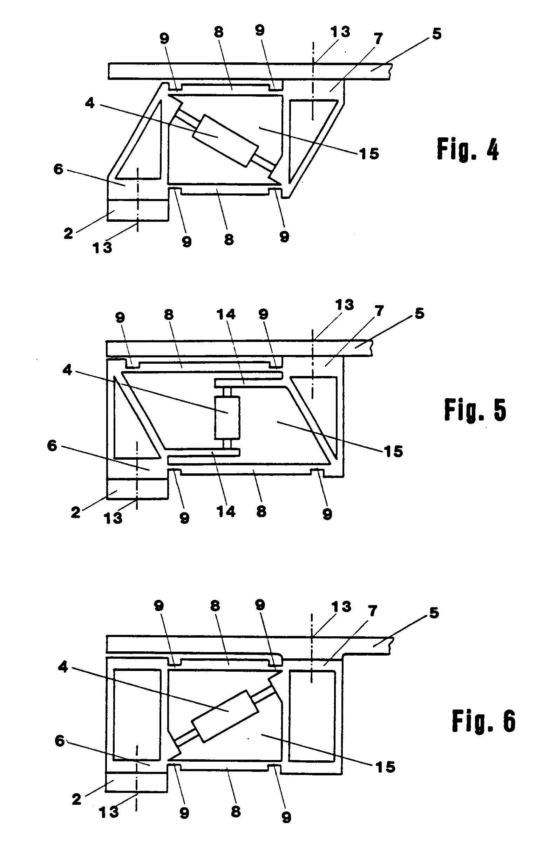

Das Profil des Ausführungsbeispiels gemäss Fig. 4 ist an sich bekannt aus der Europäischen Patentanmeldung 88 902 115.0 (WO-A1-89-1611 (EP-A1-325619)). Dort wird jedoch nur ein kurzer Profilabschnitt eingesetzt für eine Ein-Punktmesszelle bei beispielsweise einer Plattformwaage beschränkter Grösse. Beim vorliegenden Ausführungsbeispiel und auch bei allen folgenden, wo jeweils nur ein Profilquerschnitt gezeigt wird, ist immer an ein Führungsprofil 1 gemäss Fig. 1 gedacht. Hier besteht das Führungsprofil 1 aus einem dreieckigen Gestell 6, einem ebenfalls dreieckigen Lastträger 7 und den zwei Platten 8, die mittels der Biegegelenke 9 mit dem Gestell 6, bzw. dem Lastträger 7 verbunden sind. Die beiden dreieckigen Teile - Gestell 6 und Lastträger 7 - sind so angeordnet, dass die Krafteinleitung jeweils auf der kürzesten Seite des Dreiecks erfolgt. Der Kraftfühler 4 ist diagonal im rechteckförmigen Hohlraum 15 eingebaut, der zwischen den Platten 8 und den vertikal stehenden Schenkeln der genannten Dreiecke von Gestell 6 und Lastträger 7 entsteht. Die Diagonale verläuft vom oberen Ende des Gestells 6 zum unteren des Lastträgers 7. Die Verbindungen zum Fuss 2 und zur Plattform 5 wird beispielsweise durch schematisch angedeutete Schrauben vorgenommen.

Im Ausführungsbeispiel gemäss Fig. 5 sind die Dreiecke von Gestell 6 und Lastträger 7 so geformt, dass die vertikalen Schenkel aussen an das Führungsprofil 1 zu liegen kommen. Sowohl vom Gestell 6, als auch vom Lastträger 7 erstrecken sich zwei Zungen 14 in den - hier parallelogrammförmigen - Hohlraum 15. Diese Zungen 14 sind, verglichen mit der Biegehärte der Biegegelenke 9, weich gestaltet, so dass die elastische Untersetzung zwischen den Biegegelenken 9 und den Zungen 14 entsteht. Eingeschlossen in das Untersetzungsverhältnis ist, wie immer, die Eigenelastizität des Kraftfühlers 4, der hier elastisch hart gestaltet sein kann.

Fig. 6 zeigt ein Ausführungsbeispiel einer erfindungsgemässen Lastmesszelle, bei der die Profilteile, die als Gestell 6 und Lastträger 7 bezeichnet sind, als hochstehende Rechtecke ausgeführt werden. Der Kraftfühler 4 ist wiederum diagonal im Hohlraum 15 eingebaut, und erstreckt sich vom unteren Ende des Gestells 6 zum oberen des Lastträgers. Wie im Ausführungsbeispiel gemäss Fig. 5 wird der Kraftfühler 4 durch Belasten der Plattform 5 durch eine Druckkraft beaufschlagt. Die Profile der Ausführungsbeispiele gemäss den Fig. 4,5,6 werden vorzugsweise durch Extrusion hergestellt. Die spanende Nacharbeit beschränkt sich dann auf Korrekturen an den Biegegelenken 9 und auf Einschnitte an den Zungen 14.

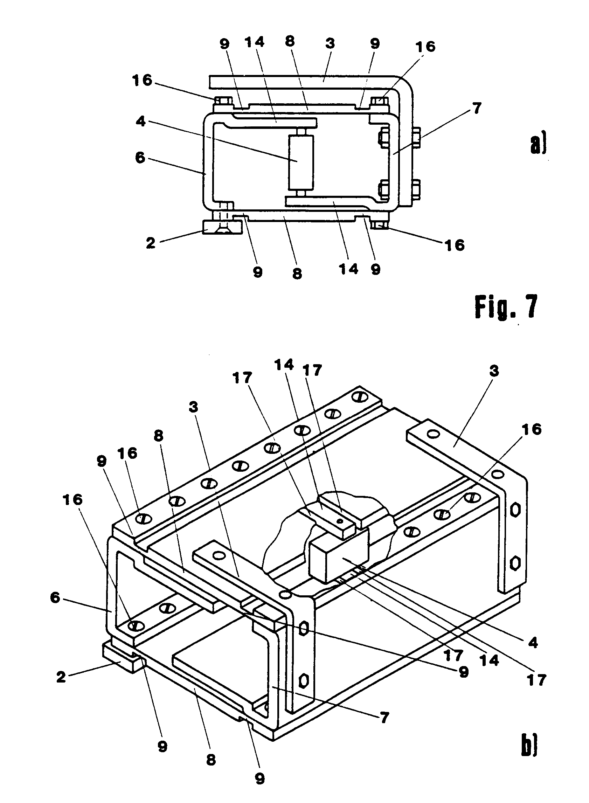

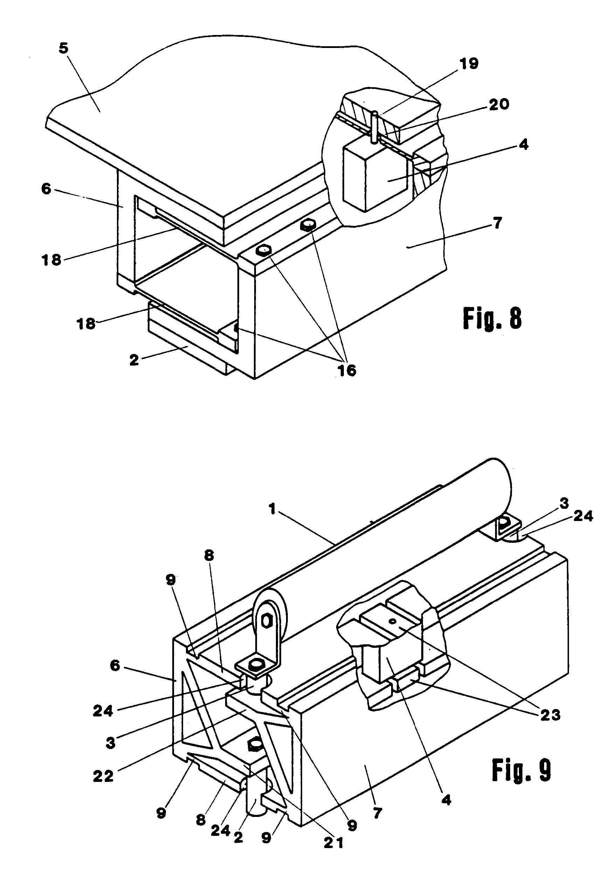

Im Gegensatz zu den bisher beschriebenen Ausführungsbeispielen sind die Führungsprofile 1 gemäss den Fig. 7 und 8 aus mehreren Profileinheiten verschraubt. Gestell 6 und Lastträger 7 sind aus zwei beispielsweise gleichen asymmetrischen U-Profilen gefertigt. Am kürzeren Schenkel jedes U-Profils ist mittels einer Mehrzahl von Schrauben 16 die eine Seite einer der Platten 8 befestigt; der längere Schenkel ist gekröpft. Vor der Kröpfung ist die andere Seite einer der Platten 8 - ebenfalls mit einer Mehrzahl von Schrauben 16 - befestigt; der abgekröpfte Teil liefert das Profil für je eine Zunge 14, die im mittleren Teil des Führungsprofiles 1 gemäss Fig. 7 mittels je zwei Einschnitten 17 in ihrer Breite gegeben ist. Wiederum sind zwei winkelförmige Befestigungselemente 3 aussen am Lastträger angeschraubt, auf welchen eine Plattform 5 befestigt werden kann. Der Kraftfühler 4 ist hier auf Zug belastet.

Im Ausführungsbeispiel gemäss Fig. 8 sind Gestell 6 und Lastträger 7 je gleich und winkelförmig ausgebildet. Anstelle von Platten 8 mit Biegegelenken 9 tritt je eine Platte 18. Diese ist im Anschlussbereich, wo sie mit dem Gestell 6, bzw. dem Lastträger 7 mit Schrauben 16 verschraubt ist, kräftig ausgeführt, hat jedoch über den ganzen Rest ihrer Breite eine geringere, aber konstante Stärke. Die obere Platte 18 ist am vertikalen Schenkel des das Gestell 6 bildenden Winkelprofils und an der Innenseite des anderen - den Lastträger 7 bildenden - Winkelprofils im Bereich von dessen Ecke verschraubt. Für die untere Platte 18 gilt (unter Vertauschung von Gestell 6 und Lastträger 7) das Entsprechende. Bei Belastung der Plattform 5 verbiegt sich die Platte 18 daher S-förmig. Der Kraftfühler 4 ist direkt an den horizontalen Schenkeln von Gestell 6 und Lastträger 7 angeschlossen. Der Anschluss geschieht mittels zweier Stelzen 19, die durch je eine Bohrung 20 in den Platten 18 hindurch geführt sind.

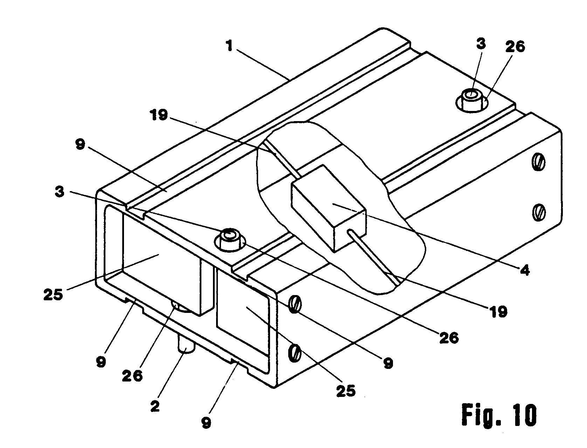

Fig. 9 zeigt ein weiteres Ausführungsbeispiel, eingebaut in eine Förderbandwaage, die nur schematisch dargestellt ist. Die zwei Füsse 2 und die zwei Befestigungselemente 3 - hier als massive Stützen ausgebildet, sind so angeordnet, dass je ein Befestigungselement 3 koaxial ist mit je einem Fuss 2. Das erfindungsgemässe Führungsprofil 1 besteht aus zwei Dreiecksprofilen. Sowohl das Gestell 6 als auch der Lastträger 7 tragen je einen, über die ganze Länge des Führungsprofils 1 sich erstreckenden Stab 21 bzw. 22, dergestalt, dass die Stäbe 21, 22 - in der Darstellung gemäss Fig. 9 - horizontal, parallel zueinander und übereinander verlaufen. Die Füsse 2 stützen den Stab 21, der Stab 22 trägt die Befestigungselemente 3. In der Mitte des Führungsprofils 1 sind die Stäbe 21, 22 quer zur Längsachse des Führungsprofils 1 eingeschnitten. Dadurch entstehen Zungen 23, analog den Zungen 14 von Fig. 7. Das Führungsprofil 1 des Ausführungsbeispiels gemäss Fig. 9 ist wiederum beispielsweise durch Extrudieren hergestellt unter Einschluss der Biegegelenke 9. Dies allerdings schliesst eine allfällige, spanabhebend ausgeführte, Nacharbeit nicht aus. Sowohl die Füsse 2, als auch die Befestigungselemente 3 sind durch Bohrungen 24 in den Platten 8 hindurchgeführt, analog den Bohrungen 20 gemäss Fig. 8.

Im Ausführungsbeispiel von Fig. 10 ist das Führungsprofil 1 beispielsweise aus einem gepressten Vierkantrohr hergestellt; die Platten 8 bilden die horizontalen, Gestell 6 und Lastträger 7 die vertikalen Seiten des genannten Vierkantrohres. Die Biegegelenke 9 können sowohl im gleichen Arbeitsgang angelegt und allenfalls spanabhebend überarbeitet oder gänzlich spanabhebend hergestellt sein. Sowohl die Füsse 2 (in Fig. 10 ist nur einer sichtbar), als auch die Befestigungselemente 3 sind an Blöcken 25 befestigt und durch Bohrungen 26 aus dem Führungsprofil 1 herausgeführt. Die Blöcke 25 sind an den Seitenwänden des Führungsprofils 1 angeschraubt, berühren dieses auch nur dort und erstrecken sich quer zu dessen Längsachse ins Innere des Führungsprofils 1. Der Kraftaufnehmer 4 durchläuft das Führungsprofil 1 diagonal in der Mittelebene und ist bespielsweise über Stelzen 19 am Führungsprofil 1 befestigt. Wird die (nicht dargestellte) Plattform 5, die auf den Befestigungselementen 3 aufliegt, belastet, so verlängert sich die genannte Diagonale des Führungsprofils 1; der Kraftaufnehmer 4 wird also durch eine Zugkraft belastet. In einer nicht gezeichneten Variante zu Fig. 10 ist der Kraftaufnehmer in der anderen Diagonale eingebaut und wird daher durch eine Druckkraft beaufschlagt.

## Patentansprüche

1. Stabartige, zwei Lasteingangspunkte aufweisende Lastmesszelle, wobei weiterhin vorgesehen ist, dass
- sie besteht aus einem Führungsprofil (1), das gegliedert ist in ein Gestell (6), einen Lastträger (7) und zwei das Gestell (6) und den Lastträger (7) verbindende, im wesentlichen parallele, Platten (8), wobei sowohl die Verbindungen vom Gestell (6) und den Platten (8), als auch von den Platten (8) und dem Lastträger (7) als bandförmige Biegegelenke (9) ausgebildet sind, die sich über die ganze Länge des Führungsprofils (1) erstrecken,
- zwei Füsse (2) vorhanden sind, welche je an einem Ende des Gestells (6) befestigt sind,
- zwei Befestigungselemente (3) vorhanden sind, die je an einem Ende des Lastträgers (7) befestigt sind,
- ein Kraftfühler (4) vorhanden ist, der zwischen Gestell (6) und Lastträger (7) in der Mitte des Führungsprofils (1) eingebaut ist,
- die Biegesteifigkeit von Gestell (6), Lastträger (7) und Platten (8) gross ist gegenüber jener der Biegegelenke (9),
- die Längsausdehnung des Führungsprofils (1) ein Mehrfaches seiner größten Querdimension beträgt.

2. Lastmesszelle nach Patentanspruch 1, dadurch gekennzeichnet, dass
- das Führungsprofil (1) besteht aus einem extrudierten vierkantigen Rohr, wobei das Gestell (6) und der Lastträger (7) die vertikalen Seiten des genannten Rohres bilden und massiver ausgeführt sind, als die Platten (8), welche die horizontalen Seiten des genannten Rohres bilden,
- die Füsse (2) direkt am Gestell (6) befestigt sind, und die Befestigungselemente (3) in Form.von Winkeln an derselben Längsposition, wie die Füsse (2) am Lastträger (7) befestigt sind,
- auf halber Länge des Führungsprofils (1) der Kraftfühler (4) in diagonaler Stellung eingebaut ist und vom Gestell (6) zum Lastträger (7) verläuft,
- die Biegegelenke (9) bei der Herstellung des Profilstabes (1) mitextrudiert sind.

3. Lastmesszelle nach Patentanspruch 1,' dadurch gekennzeichnet, dass
- das Führungsprofil (1) besteht aus einem gepressten Vierkantrohr, wobei Gestell (6) und Lastträger (7) durch die vertikalen und die Platten (8) durch die horizontalen Seiten des Vierkantrohres gebildet und durch je ein aufgeschweisstes Winkelprofil (11) zusätzlich versteift sind,
- die Füsse (2) und die Befestigungselemente (3) aus an den Winkelprofilen (11) angeschweissten Winkeln bestehen,
- auf halber Länge des Führungsprofils (1) der Kraftfühler (4) in diagonaler Stellung eingebaut ist und vom Gestell (6) zum Lastträger (7) verläuft,
- die Biegegelenke (9) durch Ausfräsen hergestellt sind.

4. Lastmesszelle nach Patentanspruch 1, dadurch gekennzeichnet, dass
- das Führungsprofil (1) aus einem extrudierten Profil besteht und aufgebaut ist aus zwei im wesentlichen parallelen Platten (8) und zwei Dreiecksprofilen, wobei die Platten (8) beidseitig durch je zwei Biegegelenke (9) mit je einem Dreiecksprofil verbunden sind, wobei das sich nach unten verbreiternde Dreieck das Gestell (6), das sich nach oben verbreiternde den Lastträger (7) bildet,
- die Füsse (2) an der schmalen Seite des Dreiecksprofils, das das Gestell (6) bildet, befestigt sind, die Befestigungselemente (3) an der schmalen Seite des Dreiecksprofils, das den Lastträger (7) bildet.

5. Lastmesszelle nach Patentanspruch 4, dadurch gekennzeichnet, dass auf halber Länge des Führungsprofils (1) der Kraftfühler (4) in diagonaler Stellung eingebaut ist und vom Gestell (6) zum Lastträger (7) verläuft.

6. Lastmesszelle nach Patentanspruch 4, dadurch gekennzeichnet, dass sowohl das Gestell (6), als auch der Lastträger (7) auf halber Länge je eine Zunge (14) tragen, zwischen welchen der Kraftfühler (4) in vertikaler Stellung eingebaut ist.

7. Lastmesszelle nach Patentanspruch 1, dadurch gekennzeichnet, dass das Führungsprofil (1) aus einem extrudierten Profil besteht und aufgebaut ist aus zwei im wesentlichen parallelen Platten (8) und zwei hochkantstehenden Rechtecksprofilen, wobei die Platten (8) beidseitig durch je zwei Biegegelenke (9) mit je einem der Rechtecksprofile verbunden sind, wobei das eine Rechtecksprofil das Gestell (6), das andere den Lastträger (7) bildet, und auf halber Länge des Führungsprofils (1) der Kraftfühler (4) in diagonaler Stellung eingebaut ist und vom Gestell (6) zum Lastträger (7) verläuft.

8. Lastmesszelle nach Patentanspruch 1, dadurch gekennzeichnet, dass
- das Führungsprofil (1) aus mehreren miteinander verschraubten Profileinheiten besteht, wobei das Gestell (6) und der Lastträger (7) aus gleichen asymmetrischen U-Profilen bestehen, an den kürzeren Schenkeln dieser U-Profile die einen Seiten der Platten (8) mittels Schrauben (16) befestigt sind,
- die längeren Schenkel der genannten U-Profile gekröpft sind, und die anderen Seiten der Platten (8) an den gekröpften Schenkeln ausserhalb der Kröpfung ebenfalls mittels Schrauben (16) befestigt sind,
- an den gekröpften Schenkeln je zwei Einschnitte (17) vorhanden sind, mittels welcher zwei Zungen (14) erzeugt werden, die auf halber Länge des Führungsprofils (1) zu liegen kommen, zwischen welche Zungen (14) der Kraftfühler (4) in vertikaler Lage eingebaut ist,
- die zwei Befestigungselemente (3) in Form von Winkeln aussen am Lastträger (7) angeschraubt sind.

9. Lastmesszelle nach Patentanspruch 1, dadurch gekennzeichnet, dass
- Gestell (6) und Lastträger (7) je aus einem massiven Winkelprofil bestehen
- die Platten (8) und die Biegegelenke (9) zu zwei biegelastischen Platten (18) zusammengefasst sind, die je zwei massive- Ränder aufweisen,
- je einer der massiven Ränder der Platten (18) mittels Schrauben (16) am vertikalen Schenkel eines der genannten Winkelprofile befestigt ist, während die anderen genannten massiven Ränder der Platten (18) ebenfalls mit Schrauben (16) an der Innenseite der horizontalen Schenkel der genannten Winkelprofile im Bereich von deren Ecken befestigt sind,
- die Platten (18) in deren Mitten je eine Bohrung (20) aufweisen, durch welche je ein Stelze (19) hindurchgeführt ist, die den vertikal angeordneten Kraftfühler (4) mit je einem horizontalen Schenkel der genannten, Gestell (6) und Lastträger (7) bildenden, Winkelprofile verbindet,

10. Lastmesszelle nach Patentanspruch 1, dadurch gekennzeichnet, dass
- das Führungsprofil (1) aus einem extrudierten Profil besteht und aufgebaut ist aus zwei im wesentlichen parallelen Platten (8) und zwei Dreiecksprofilen, wobei die Platten (8) beidseitig durch je zwei Biegegelenke (9) mit je einem Dreiecksprofil verbunden sind, und das sich nach unten verbreiternde Dreieck das Gestell (6), das sich nach oben verbreiternde den Lastträger (7) bildet,
- jedes der genannten Dreiecksprofile einen vertikalen Schenkel aufweist, der die äussere Begrenzung des Führungsprofils (1) bildet, während die beiden anderen Seiten des Dreiecksprofils sich nach dem Inneren des Führungsprofils (1) erstrecken,
- die Dreiecksprofile von Gestell (6) und Lastträger (7) je einen horizontalen, flachen, über die ganze Länge des Führungsprofils (1) verlaufenden Stab (21, 22) tragen, dergestalt dass die Stäbe (21, 22) horizontal, parallel zueinander und übereinander verlaufen
- jede der Platten (8) zwei Bohrungen (24) aufweist, die an den Enden des Führungsprofils (1) angeordnet sind,
- die Füsse (2) durch die Bohrungen der unteren Platte (8) hindurchlaufen und den mit dem Gestell (6) verbundenen unteren Stab (21) stützen, die Befestigungungselemente (3) sich durch die Bohrungen (24) in der oberen Platte (8) hindurch auf den mit dem Lastträger (7) verbundenen Stab (22) abstützen, so dass je ein Fuss (21 und ein Befestigungselement (3) auf derselben vertikalen Achse liegen,
- der Kraftfühler in vertikaler Lage zwischen den Stäben (21, 22) eingebaut ist.

11. Lastmesszelle nach Patentanspruch 10, dadurch gekennzeichnet, dass die beiden Stäbe (21, 22) im Bereich der halben Länge des Führungsprofils (1) quer zu ihren Längsachsen eingeschnitten sind, und dadurch je eine Zunge (23) entsteht, zwischen welchen Zungen (23) der Kraftfühler (4) in vertikaler Lage eingebaut ist.

12. Lastmesszelle nach Patentanspruch 1, dadurch gekennzeichnet, dass
- das Führungsprofil (1) besteht aus einem gepressten Vierkantrohr, wobei Gestell (6) und Lastträger (7) durch die vertikalen Seiten, und die Platten (8) durch die horizontalen Seiten des Vierkantrohres gebildet sind,
- vier Blöcke (25) vorhanden sind, von denen je zwei am Gestell (6) und am Lastträger (7) an den Enden des Führungsprofils (1) angeschraubt sind, das Führungsprofil (1) auch nur dort berühren und sich quer zu dessen Längsachse ins Innere des Führungsprofils (1) erstrecken,
- sowohl die untere, als auch die obere Platte (8) je zwei Bohrungen (26) aufweist
- die Füsse (2) an den mit dem Gestell (6) verbundenen Blöcken (25) befestigt sind und sich durch die unteren Bohrungen (26) hindurch nach unten erstrecken,
- die Befestigungselemente (3) an den mit dem Lastträger verbundenen Blöcken (25) befestigt sind und sich durch die oberen Bohrungen (26) hindurch nach oben erstrecken,
- auf halber Länge des Führungsprofils (1) der Kraftfühler (4) in diagonaler Stellung eingebaut ist und vom Gestell (6) zum Lastträger (7) verläuft,
- die Biegegelenke (9) durch Ausfräsen hergestellt sind.

13. Lastmesszelle nach einem der Patentansprüche 2, 3. 5, 7, 12, dadurch gekennzeichnet, dass der diagonal eingebaute Kraftfühler (4) vom oberen Rand des Gestells (6) zum unteren Rand des Lastträgers (7) verläuft.

14. Lastmesszelle nach einem der Patentansprüche 2, 3, 5, 7, 12, dadurch gekennzeichnet, dass der diagonal eingespannte Kraftfühler (4) vom unteren Rand des Gestells (6) zum oberen Rand des Lastträgers (7) verläuft.

## Claims

1. A bar-like, load-measuring cell with two load input points, wherein it is further provided that
- it comprises a guide section (1) which is divided into a frame (6), a load-bearing unit (7) and two substantially parallel plates (8) which connect the frame (6) to the load-bearing unit (7), with both the connections of the frame (6) to the plates (8) and the connections of the plates (8) to the load-bearing unit (7) in the form of strip-like flexible connecting portions (9) which extend over the entire length of the guide section (1),
- it is provided with two feet (2), each of which is secured to one end of the frame (6),
- it is provided with two fastening elements (3), each of which is secured to one end of the load-bearing unit (7),
- it is provided with a force sensor (4) fitted between the frame (6) and the load-bearing unit (7) in the middle of the guide section (1),
- the flexural strength of the frame (6), load-bearing unit (7) and the plates (8) is large relative to that of the flexible connecting portions (9),
- the longitudinal extent of the guide section (1) is several-fold its greatest transverse dimension.

2. A load measuring cell according to claim 1, characterised in that
- the guide section (1) comprises an extruded four-edged tube with the frame (6) and the load-bearing unit (7) forming the upright sides of the said tube and of more solid construction than the plates (8) which form the horizontal sides of the said tube,
- the feet (2) are secured directly to the frame (6) and the fastening elements (3) in the form of angle brackets are secured at the same longitudinal position as the feet (2) are to the load-bearing unit (7),
- the force sensor (4) is fitted in a diagonal position half way along the guide section (1) and extends from the frame (6) to the load-bearing unit (7),
- the flexible connecting portions (9) are co-extruded in the manufacture of the guide section (1).

3. A load measuring cell according to claim 1, characterised in that
- the guide section (1) comprises a pressed four-edged tube with the frame (6) and load-bearing unit (7) formed from the upright sides of the four-edged tube and the plates (8) from the horizontal sides of the four-edged tube and in each case strengthened through a welded-on angle section (11),
- the feet (2) and the fastening elements (3) comprise angle brackets welded onto the angle sections (11),
- the force sensor (4) is fitted in a diagonal position half way along the guide section (1) and extends from the frame (6) to the load-bearing unit (7),
- the flexible connecting portions (9) are made by milling out.

4. A load measuring cell according to claim 1, characterised in that
- the guide section (1) is an extruded section and is constructed from two substantially parallel plates (8) and two triangular sections, the said plates (8) each connected on both sides through two flexible connecting portions (9) to a triangular section, so that the triangle broadening downwards forms the frame (6) and that broadening upwards forms the load-bearing unit (7),
- the feet (2) are secured to the narrow side of the triangular section which forms the frame (6) and the fastening elements (3) are secured to the narrow side of the triangular section which forms the load-bearing unit (7).

5. A load measuring cell according to claim 4, characterised in that the force sensor (4) is fitted in a diagonal position half way along the guide section (1) and extends from the frame (6) to the load-bearing unit (7).

6. A load measuring cell according to claim 4, characterised in that both the frame (6) and the load-bearing unit (7) each bear a tongue (14) half way along them with the force sensor (4) fitted in an upright position between the said tongues.

7. A load measuring cell according to claim 1, characterised in that the guide section (1) is an extruded section and is constructed from two substantially parallel plates (8) and two upright rectangular sections, the said plates (8) each connected on both sides through two flexible connecting portions (9) to one of the rectangular sections, with one rectangular section forming the frame (6) and the other forming the load-bearing unit (7), and with the force sensor (4) fitted in a diagonal position half way along the guide section (1) and extending from the frame (6) to the load-bearing unit (7).

8. A load measuring cell according to claim 1, characterised in that
- the guide section (1) comprises a plurality of section units screwed together, with the frame (6) and the load-bearing unit (7) composed of identical asymmetrical U-sections and with one side of the plates (8) secured to the shorter limbs of these U-section through screws (16),
- the longer limbs of the said U-sections are bent at right angles and the other sides of the plates (8) are secured to the offset limbs outside the offset, similarly through screws (16),
- two notches (17) are provided on each of the offset limbs to yield two tongues (14) which come to lie half way along the guide section (1), with the force sensor (4) fitted in an upright position between the said tongues (14),
- the two fastening elements (3) in the form of angle brackets are screwed externally to the load-bearing unit (7).

9. A load measuring cell according to claim 1, characterised in that
- the frame (6) and load-bearing unit (7) are each comprised of a solid angle section,
- the plates (8) and the flexible connecting portions (9) are joined to form two flexural plates (18) which each have two solid edges,
- one solid edge of each of the plates (18) is secured through screws (16) to the upright limb of one of the said angle sections, with the other said solid edge of each of the plates (18) secured, again with screws (16), to the inner side of the horizontal limb of the said angle section in the region of its corners,
- the plates (18) are each provided with a central through-hole (20) through which a stilt (19) projects and connects the upright force sensor (4) to one horizontal limb of each of the angle sections forming the said frame (6) and load-bearing unit (7).

10. A load measuring cell according to claim 1, characterised in that
- the guide section (1) is an extruded section and is constructed from two substantially parallel plates (8) and two triangular sections, the said plates (8) each connected on both sides through two flexible connecting portions (9) to a triangular section, with the triangle broadening downwards forming the frame (6) and that broadening upwards forming the load-bearing unit (7),
- each of the said triangular sections is provided with an upright limb which forms the outer limit of the guide section (1), with the two other sides of the triangular section extending towards the interior of the guide section (1),
- the triangular sections of frame (6) and load-bearing unit (7) each bear a horizontal, flat bar (21, 22) extending over the entire length of the guide section (1) such that the bars (21, 22) extend horizontally, superposed and parallel to one another,
- each of the plates (8) has two through-holes (24) which are arranged on the ends of the guide section (1),
- the feet (2) extend through the through-holes of the lower plate (8) and support the lower bar (21) which is connected to the frame (6), and the fastening elements (3) are braced through the through-holes (24) in the upper plate (8) against the bar (22) connected to the load-bearing unit (7), so that one foot (2) and one fastening element (3) lie on the same vertical axis,
- the force sensor is fitted in an upright position between the bars (21, 22).

11. A load measuring cell according to claim 10, characterised in that both bars (21, 22) are notched transversely to their longitudinal axes in the region of half way along the guide section (1) so as to form a tongue (23) in each case, with the force sensor (4) fitted in an upright position between the said tongues (23).

12. A load measuring cell according to claim 1, characterised in that
- the guide section (1) comprises a pressed four-edged tube, with the frame (6) and load-bearing unit (7) formed from the upright sides of the four-edged tube and the plates (8) from the horizontal sides of the four-edged tube,
- four blocks (25) are provided, two of which are screwed to the frame (6) and two to the load-bearing unit (7) at the ends of the guide section (1), the said blocks (25) contacting the guide section (1) only at those points and extending into the interior of the guide section (1) transversely to its longitudinal axis,
- both the lower and upper plate (8) each have two through-holes (26),
- the feet (2) are secured to the blocks (25) connected to the frame (6) and extend downwards through the lower through-holes (26),
- the fastening elements (3) are secured to the blocks (25) connected to the frame and extend upwards through the upper through-holes (26),
- the force sensor (4) is fitted in a diagonal position half way along the guide section (1) and extends from the frame (6) to the load-bearing unit (7),
- the flexible connecting portions (9) are made by milling out.

13. A load measuring cell according to any one of claims 2, 3, 5, 7, or 12, characterised in that the diagonally-fitted force sensor (4) extends from the upper edge of the frame (6) to the lower edge of the load-bearing unit (7).

14. A load measuring cell according to any one of claims 2, 3, 5, 7, or 12, characterised in that the diagonally-clamped force sensor (4) extends from the lower edge of the frame (6) to the upper edge of the load-bearing unit (7).

## Revendications

1. Cellule de mesure de charge en forme de barre comportant deux points d'entrée de charge, pour laquelle
- il est également prévu qu'elle se compose d'un profilé de guidage (1) formé d'un châssis (6), d'un porte-charge (7) et de deux plaques (8) sensiblement parallèles reliant le châssis (6) et le porte-charge (7), étant précisé que les liaisons entre le châssis (6) et les plaques (8) et entre les plaques (8) et le porte-charge (7) sont conçues comme des joints articulés de flexion (9) en forme de bandes, qui s'étendent sur toute la longueur du profilé de guidage (1),
- il est prévu deux pieds (2) qui sont fixés chacun à une extrémité du châssis (6),
- il est prévu deux éléments de fixation (3) qui sont fixés chacun à une extrémité du porte-charge (7),
- il est prévu un capteur de force (4) qui est monté entre le châssis (6) et le porte-charge (7), au milieu du profilé de guidage (1),
- il est prévu que la rigidité à la flexion du châssis (6), du porte-charge (7) et des plaques (8) soit grande par rapport à celle des joints articulés de flexion (9), et
- il est prévu que l'extension longitudinale du profilé de guidage (1) soit plusieurs fois supérieure à sa dimension transversale maximale.

2. Cellule de mesure de charge selon la revendication 1, caractérisée en ce que
- le profilé de guidage (1) se compose d'un tuyau rectangulaire extrudé, le châssis (6) et le porte-charge (7) formant les côtés verticaux dudit tuyau et ayant une configuration plus massive que les plaques (8), qui forment les côtés horizontaux dudit tuyau,
- les pieds (2) sont fixés directement au châssis (6) et les éléments de fixation (3) en forme d'équerres sont fixés au porte-charge (7) à la même position longitudinale que les pieds (2),
- à mi-longueur du profilé de guidage (1), le capteur de force (4) est monté dans une position diagonale et va du châssis (6) au porte-charge (7), et
- les joints articulés de flexion (9) sont extrudés en même temps que la fabrication de la barre profilée (1).

3. Cellule de mesure de charge selon la revendication 1, caractérisée en ce que
- le profilé de guidage (1) se compose d'un tuyau rectangulaire moulé par compression, le châssis (6) et le porte-charge (7) étant formés par les côtés verticaux du tuyau rectangulaire et les plaques (8) étant formées par ses côtés horizontaux et pourvues d'un renforcement supplémentaire grâce à des cornières respectives (11) soudées,
- les pieds (2) et les éléments de fixation (3) se composent d'équerres soudées aux cornières (11),
- à mi-longueur du profilé de guidage (1), le capteur de force (4) est monté dans une position diagonale et va du châssis (6) au porte-charge (7), et
- les joints articulés de flexion (9) sont fabriqués par fraisage.

4. Cellule de mesure de charge selon la revendication 1, caractérisée en ce que
- le profilé de guidage (1) se compose d'un profilé extrudé et est formé de deux plaques (8) sensiblement parallèles et de deux profilés triangulaires, étant précisé que les plaques (8) sont reliées chacune, des deux côtés, à un profilé triangulaire grâce à deux joints articulés de flexion (9), et que le triangle s'élargissant vers le bas forme le châssis (6) tandis que celui qui s'élargit vers le haut forme le porte-charge (7), et
- les pieds (2) sont fixés au côté étroit du profilé triangulaire qui forme le châssis (6) tandis que les éléments de fixation (3) sont fixés au côté étroit du profilé triangulaire qui forme le porte-charge (7).

5. Cellule de mesure de charge selon la revendication 4, caractérisée en ce que, à mi-longueur du profilé de guidage (1), le capteur de force (4) est monté dans une position diagonale et va du châssis (6) au porte-charge (7).

6. Cellule de mesure de charge selon la revendication 4, caractérisée en ce que le châssis (6) et le porte-charge (7) portent, à mi-longueur, des languettes respectives (14) entre lesquelles le capteur de force (4) est monté dans une position verticale.

7. Cellule de mesure de charge selon la revendication 1, caractérisée en ce que le profilé de guidage (1) se compose d'un profilé extrudé et est formé de deux plaques (8) sensiblement parallèles et de deux profilés rectangulaires dressés sur chant, étant précisé que les plaques (8) sont reliées des deux côtés à l'un des profilés rectangulaires grâce à deux joints articulés de flexion (9), que l'un des profilés rectangulaires forme le châssis (6) tandis que l'autre forme le porte-charge (7), et qu'à mi-longueur du profilé de guidage (1), le capteur de force (4) est monté dans une position diagonale et va du châssis (6) au porte-charge (7).

8. Cellule de mesure de charge selon la revendication 1, caractérisée en ce que
- le profilé de guidage (1) se compose de plusieurs unités profilés reliées entre elles par vissage, étant précisé que le châssis (6) et le porte-charge (7) se composent de profilés en U asymétriques identiques, et que des premiers côtés des plaques (8) sont fixés aux branches courtes de ces profilés en U à l'aide de vis (16),
- les branches longues desdits profilés en U sont coudées et les seconds côtés des plaques (8) sont fixés aux branches coudées, à l'extérieur du coude, également à l'aide de vis (16),
- il est prévu, sur chacune des branches coudées, deux entailles (17) grâce auxquelles sont formées deux languettes (14) qui arrivent à mi-longueur du profilé de guidage (1) et entre lesquelles le capteur de force (4) est monté dans une position verticale, et
- les deux éléments de fixation (3) en forme d'équerres sont vissés à l'extérieur du porte-charge (7).

9. Cellule de mesure de charge selon la revendication 1, caractérisée en ce que
- le châssis (6) et le porte-charge (7) se composent chacun d'une cornière massive,
- les plaques (8) et les joints articulés de flexion (9) sont réunis en deux plaques (18) élastiques par flexion qui comportent chacune deux bords massifs,
- l'un des bords massifs des plaques (18) est fixé à la branche verticale de l'une des cornières à l'aide de vis (16), tandis que les autres bords massifs des plaques (18) sont fixés, également à l'aide de vis (16), au côté intérieur des branches horizontales des cornières, dans la zone des coins de celles-ci, et
- les plaques (18) présentent en leur centre un perçage (20) par lequel passe une tige (19) qui relie le capteur de force (4) disposé à la verticale à une branche horizontale des cornières formant le châssis (6) et le porte-charge (7).

10. Cellule de mesure de charge selon la revendication 1, caractérisée en ce que
- le profilé de guidage (1) se compose d'un profilé extrudé et est formé de deux plaques (8) sensiblement parallèles et de deux profilés triangulaires, étant précisé que les plaques (8) sont reliées des deux côtés à un profilé triangulaire grâce à deux joints articulés de flexion (9), et que le profilé triangulaire s'élargissant vers le bas forme le châssis (6) tandis que le profilé triangulaire s'élargissant vers le haut forme le porte-charge (7),
- chacun desdits profilés triangulaires comporte une branche verticale qui définit la délimitation extérieure du profilé de guidage (1), tandis que les deux autres côtés du profilé triangulaire s'étendent vers l'intérieur du profilé de guidage (1),
- les profilés triangulaires du châssis (6) et du porte-charge (7) portent chacun une barre horizontale plate (21, 22) s'étendant sur toute la longueur du profilé de guidage (1), de telle sorte que les barres (21, 22) s'étendent à l'horizontale, parallèlement l'une par rapport à l'autre et l'une au-dessus de l'autre,
- chacune des plaques (8) présente deux perçages (24) qui sont disposés aux extrémités du profilé de guidage (1),
- les pieds (2) traversent les perçages de la plaque (8) inférieure et supportent la barre inférieure (21) reliée au châssis (6), et les éléments de fixation (3) s'appuient, à travers les perçages (24) ménagés dans la plaque (8) supérieure, sur la barre (22) reliée au porte-charge (7), de sorte qu'à chaque fois, un pied (2) et un élément de fixation (3) se trouvent sur un même axe vertical, et
- le capteur de force est monté dans une position verticale entre les barres (21, 22).

11. Cellule de mesure de charge selon la revendication 10, caractérisée en ce que les deux barres (21, 22) sont entaillées transversalement par rapport à leurs axes longitudinaux, dans la zone de la moitié de la longueur du profilé de guidage (1), ce qui forme des languettes (23) entre lesquelles le capteur de force (4) est monté dans une position verticale.

12. Cellule de mesure de charge selon la revendication 1, caractérisée en ce que
- le profilé de guidage (1) se compose d'un tuyau rectangulaire moulé par compression, le châssis (6) et le porte-charge (7) étant formés par les côtés verticaux et les plaques (8) par les côtés horizontaux du tuyau rectangulaire,
- il est prévu quatre blocs (25) dont deux sont vissés au châssis (6) et deux au porte-charge (7), aux extrémités du profilé de guidage (1), qui ne touchent le profilé de guidage (1) qu'à ces endroits et qui s'étendent transversalement par rapport à l'axe longitudinal dudit profilé de guidage (1), vers l'intérieur de celui-ci,
- la plaque (8) inférieure et la plaque (8) supérieure présentent chacune deux perçages (26),
- les pieds (2) sont fixés aux blocs (25) reliés au châssis (6) et s'étendent vers le bas à travers les perçages (26) inférieurs,
- les éléments de fixation (3) sont fixés aux blocs (25) reliés au porte-charge et s'étendent vers le haut à travers les perçages (26) supérieurs,
- à mi-longueur du profilé de guidage (1), le capteur de force (4) est monté dans une position diagonale et va du châssis (6) au porte-charge (7),
- les joints articulés de flexion (9) sont fabriqués par fraisage.

13. Cellule de mesure de charge selon l'une des revendications 2, 3, 5, 7, 12, caractérisée en ce que le capteur de force (4) monté en diagonale va du bord supérieur du châssis (6) au bord inférieur du porte-charge (7).

14. Cellule de mesure de charge selon l'une des revendications 2, 3, 5, 7, 12, caractérisée en ce que le capteur de force (4) serré en diagonale va du bord inférieur du châssis (6) au bord supérieur du porte-charge (7).
